# EUROPEAN PATENT APPLICATION

(11) **EP 2 487 514 A1**
(43) Date of publication of application: **15.08.2012**
(21) Application number: 11154081.1
(22) Date of filing: 10.02.2011
(51) Int. Cl.: G02B 6/00

(54) **Improved edge-type LED backlight module**

(71) Applicant: Kocam International Co.Ltd., Kung Fu Road San Chung City, Taipei Hseng (CN)
(72) Inventor: Chen, Tsan-Jung, San Chung City, Taipei Hseng (TW)
(74) Representative: Kurig, Thomas

(57) **Abstract**

The present invention relates to an improved edge-type LED backlight module, comprising: a cover, a printed circuit board (PCB), a plurality of LEDs, a reflective member, a light guide plate (LGP), and a bottom reflective member, wherein the PCB, the plurality of LEDs, and the reflective member are disposed in the cover, the reflective member is used for reflecting a light emitted by the LEDs. A light incident surface of the LGP having a plurality of concave arc-shaped surfaces which are opposite to the plurality of LEDs, respectively, so that, when the light incident into the light incident surface, the light can be extended by the concave arc-shaped surfaces and evenly distributed in the LGP 15; moreover, after the light incident the LGP, the bottom reflective member is able to avoid the light leakage occurring in one side surface of the LGP.

## Description

### BACKGROUND OF THE INVENTION

### 1. Technical Field

The present invention relates to an LED backlight module, and more particularly, to an improved edge-type LED backlight module, in which, it is able to improve uneven optical regions forms on a light guide plate (LGP) when a light incidents to the LGP.

### 2. Description of Related Art

LCD display is the most widely used display product, the LCD display is able to exactly show images by way of using a liquid crystal layer of a liquid crystal panel to control the light transmittance of the location of each pixel. For the liquid crystal panel is a non-self-luminous material, the LCD display must to be included a backlight module for providing the liquid crystal panel with a light source. Generally, the backlight module has a cover for accommodating a plurality of LEDs, moreover, in order to make the backlight module to perform the best efficiency, the structure of the cover may be different according to the different kinds of the backlight module.

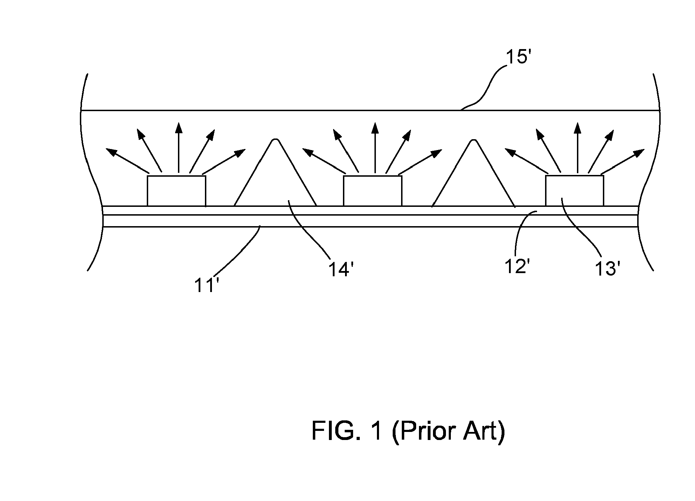

Referring to FIG. 1, a top view of a conventional edge-type LED backlight module is illustrated, as shown in FIG. 1, a conventional edge-type LED backlight module 1' includes: a cover 11', a long printed circuit board 12', a plurality of LEDs 13', and a plurality of reflective film 14', wherein the long printed circuit board 12', the plurality of LEDs 13' and the plurality of reflective film 14' are disposed in the cover 11'. The LEDs 13' are able to emit light to a light guide plate 15', the reflective film 14' is used to reflect the light, so as to make the light evenly incident into the light guide plate 15'.

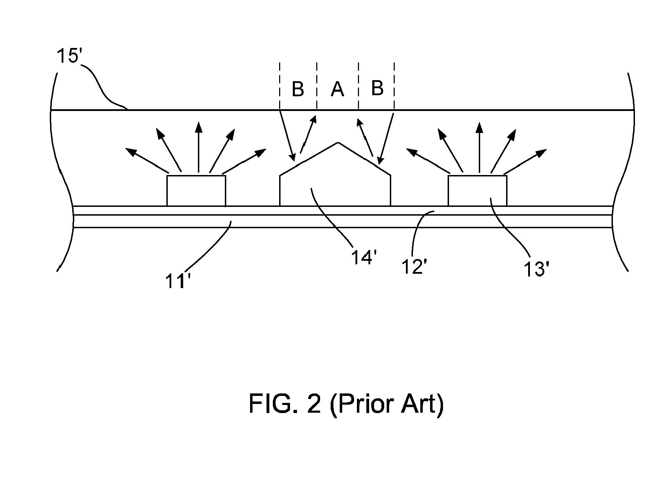

However, with the increase of light-emitting power of the LED products, the numbers of the LEDs 13' used in the conventional edge-type LED backlight module 1' described above will be relatively reduced. Besides, please refer to FIG. 2, which illustrates the top view of an edge-type LED backlight module with high power LEDs, as shown in FIG. 2, in order to prevent the high power LEDs 13' from producing optical light districts in specific regions of the light guide plate 15', the adjacent distance between two LEDs 13' is increased for obtaining an uniform brightness distribution on the light guide plate 15'. However, the numbers of the reflective film 14' is also be relatively reduced due to the numbers of the LEDs 13' are reduced, for this reason, the structure of the reflective film 14' is improved for getting better light-reflecting effect. Even so, the light which incident into the light guide plate 15' still cause optical dark areas in the light guide plate 15', as shown in FIG. 2, A-area is the most dark area and B-area is second dark area.

Accordingly, in view of the conventional edge-type LED backlight module still has shortcomings and drawbacks, the inventor of the present application has made great efforts to make inventive research thereon and eventually provided an integrated circuit capable of repeatedly using current.

### BRIEF SUMMARY OF THE INVENTION

The primary objective of the present invention is to provide an improved edge-type LED backlight module, in which a light incident surface of a light guide plate (LGP) has a plurality of concave arc-shaped surfaces, and the concave arc-shaped surfaces can spread light when the light incident into the light incident surface, further that the incident light are evenly spread in the LGP, moreover, a bottom reflective member is used to avoid the light leakage occurring in one side surface of the LGP.

The another objective of the present invention is to provide an improved edge-type LED backlight module, in which the appearance shapes of a cover and a reflective member are changed for increasing the applications of the edge-type LED backlight module.

Accordingly, to achieve the abovementioned primary objective, the inventor proposes an improved edge-type LED backlight module, comprising: a cover; a printed circuit board (PCB), disposed in the cover; a reflective member, disposed in the cover and on the PCB, the reflective member has a plurality of openings; a plurality of LEDs, disposed in the cover and on the PCB, wherein the LEDs have a light-emitting surface passing through the openings of the reflective member and emitting a light, respectively; a light guide plate (LGP), disposed in the cover and located over the LEDs, the LGP has a light incident surface for receiving the light emitted from the LEDs, and the light incident surface has a plurality of concave arc-shaped surfaces corresponding to the LEDs, respectively, wherein when the light incident into the light incident surface, the light may be spread by the concave arc-shaped surfaces and evenly distributed in the LGP; and a bottom reflective member, disposed in the cover and connects to a side surface of the LGP perpendicular to the light incident surface.

### BRIEF DESCRIPTION OF THE SEVERAL VIEWS OF THE DRAWINGS

The invention as well as a preferred mode of use and advantages thereof will be best understood by referring to the following detailed description of an illustrative embodiment in conjunction with the accompanying drawings, wherein:
FIG. 1 is a top view of a conventional edge-type LED backlight module;
FIG. 2 is the top view of an edge-type LED backlight module with high power LEDs;
FIG. 3 is the top view of a first embodiment of an improved edge-type LED backlight according to the present invention;
FIG. 4 is a side view of the first embodiment of the improved edge-type LED backlight module according to the present invention;
FIG. 5 is a stereogram of the first embodiment of the improved edge-type LED backlight module according to the present invention;
FIG. 6 is the top view of a second embodiment of the improved edge-type LED backlight module according to the present invention;
FIG. 7 is the side view of the second embodiment of the improved edge-type LED backlight module according to the present invention;
FIG. 8 is a second top side view of the second embodiment of the improved edge-type LED backlight module according to the present invention;
FIG. 9 is the top view of a third embodiment of the improved edge-type LED backlight module according to the present invention;
FIG. 10 is the side view of a fourth embodiment of the improved edge-type LED backlight module according to the present invention; and
FIG. 11 is the top view of a fifth embodiment of the improved edge-type LED backlight module according to the present invention.

### DETAILED DESCRIPTION OF THE INVENTION

To more clearly describe an improved edge-type LED backlight module according to the present invention, embodiments of the present invention will be described in detail with reference to the attached drawings hereinafter.

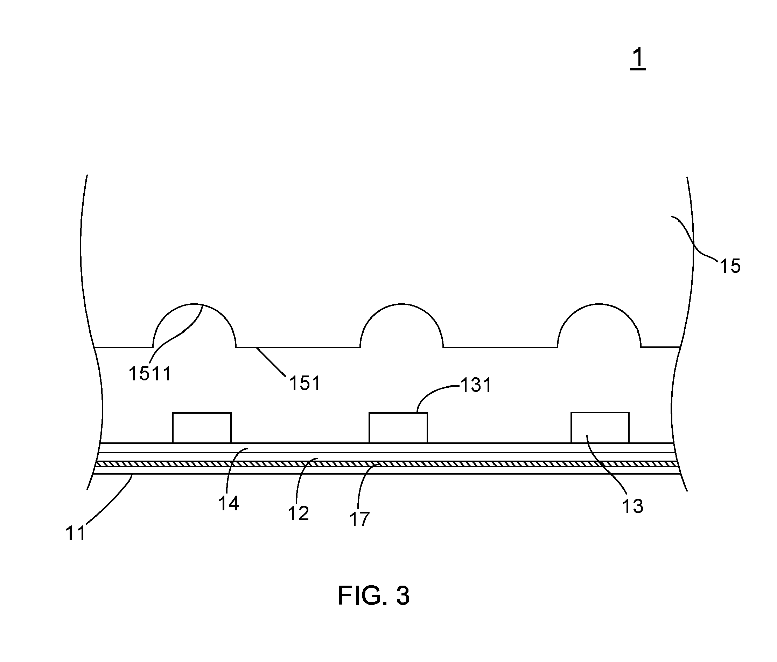

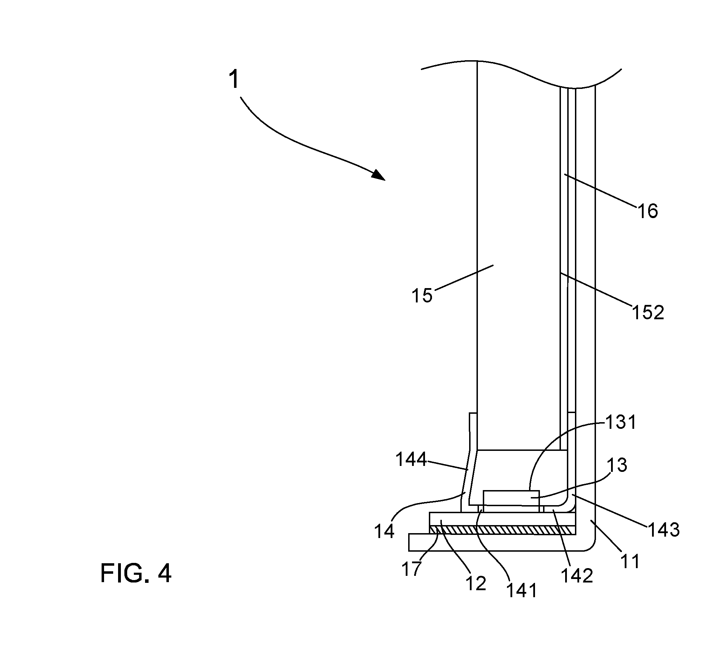

The improved edge-type LED backlight module of the present invention includes multiple embodiments, please refer to FIG. 3 and FIG. 4, which respectively illustrate a top view and a side view of the first embodiment of the improved edge-type LED backlight module according to the present invention, as shown in FIGs. 3 and 4, the improved edge-type LED backlight module 1 includes: a cover 11, a printed circuit board (PCB) 12, a reflective member 14, a plurality of LEDs 13, a light guide plate (LGP) 15, and a bottom reflective member 16, wherein the appearance shape of the cover 11 is an "L" shape.

The printed circuit board (PCB) 12 is a copper foil circuit and attached to an inner surface of the cover 11 via a thermally conductive insulating adhesive 17. The reflective member 14 is disposed in the cover 11 and on the PCB 12, as shown in FIG. 4, the appearance shape of the reflective member 14 is a " 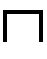 "-like shape, and the reflective member 14 includes a reflective member bottom portion 142, a reflective member long portion 143, a reflective member short portion 144, and a plurality of openings 141, wherein the plurality of openings 141 are formed on the reflective member bottom portion 142. Moreover, the reflective member short portion 144 can be bent and closely attached to the light guide plate (LGP) 15, such that, it facilitates the assembly of the improved edge-type LED backlight module 1.

The plurality of LEDs 13 are disposed in the cover 11 and on the PCB 12, the LEDs 13 have a light-emitting surface 131 passing through the openings 141 of the reflective member 14 and emit a light, respectively. The light guide plate (LGP) 15 is partially disposed in the cover 11 and located over the LEDs 13, the LGP 15 has a light incident surface 151 for receiving the light emitted by the LEDs 13. As shown in FIG. 4, in the first embodiment of the improved edge-type LED backlight module 1, the light incident surface 151 has a plurality of concave arc-shaped surfaces 1511 corresponding to the LEDs 13, respectively, wherein when the light incident into the light incident surface 151, the light may be spread by the concave arc-shaped surfaces 1511 and evenly distributed in the LGP 15. The bottom reflective member 16 is dispose in the cover 11 and connects to a side surface 152 of the LGP 15 perpendicular to the light incident surface 151, thus, after the light incident the LGP 15, the bottom reflective member 16 is able to prevent the light leakage from occurring in side surface 152 of the LGP 15.

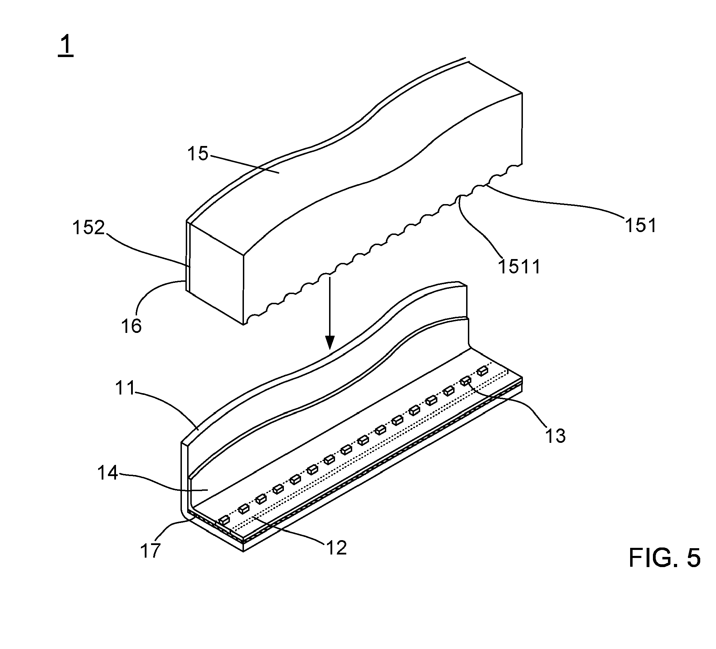

Continuously referring to FIGs. 3, 4 and 5, in which FIG. 5 illustrated a stereogram of the first embodiment of the improved edge-type LED backlight module according to the present invention. As shown in FIG. 5, the plurality of concave arc-shaped surfaces 1511 are formed a plurality of notches, respectively, and each of the notches are opposite to each of the LEDs for facilitating the assembly of the LGP 15 and the cover 11.

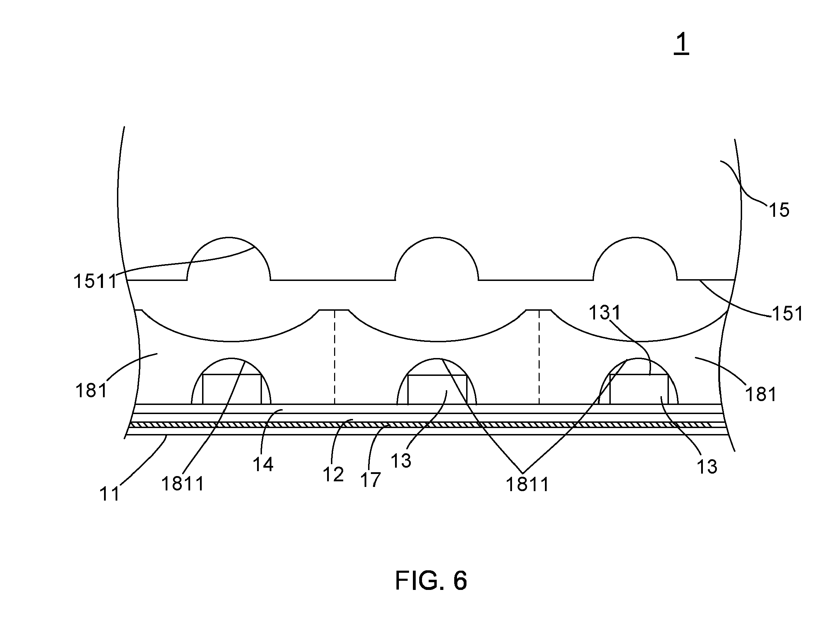

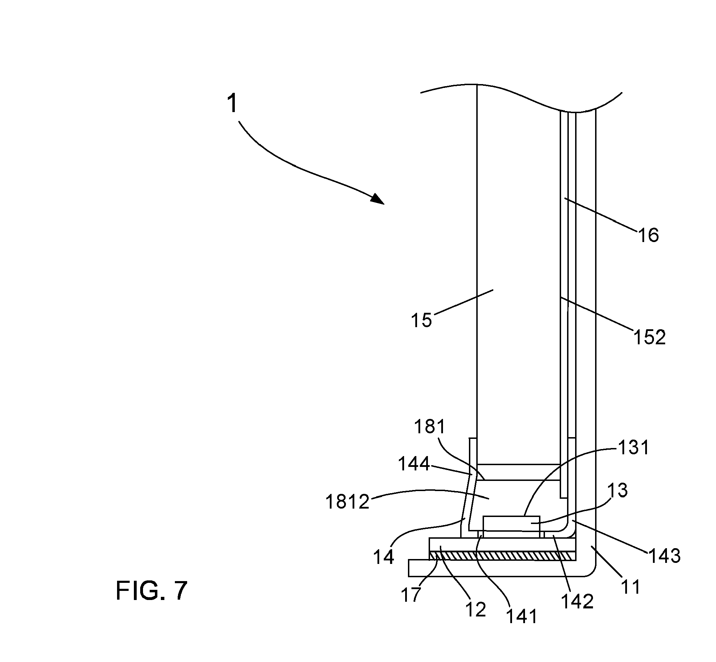

In addition, referring to FIG. 6 and FIG. 7, which illustrated the top view and the side view of a second embodiment of the improved edge-type LED backlight module, respectively. For making the light emitted by the LEDs 13 able to evenly incident into the notches formed on the light incident surface 151, a plurality of lens structures 181 are added into the first embodiment of the present invention. As shown in FIG. 6, the lens structures 181 are disposed in the cover11 and located over the LEDs 13, respectively; therefore, a second embodiment of the improved edge-type LED backlight module 1 is made. As shown in FIG. 6, the light are able to evenly incident into the LGP 15 by way of passing through the lens structures 181, moreover, the surface of the lens structure 181 opposite to the LED 13 has an anti-reflection film 1811 for increasing the transmittance of the lens structure 181. In the second embodiment, the lens structure 181 can be a single-concave lens or a double-concave lens, and it shows the double-concave lens in FIG .6. Besides, the plurality of lens structures 181 can be integrally made for being easily assembled with the cover 11.

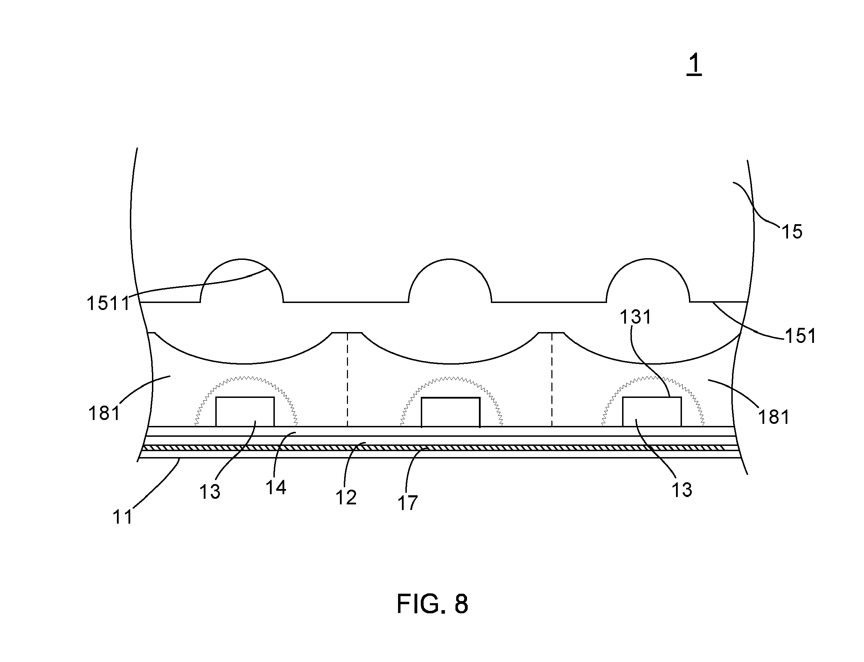

Moreover, as shown in FIG. 7, two side surfaces 1812 of the les structure 181 are a trapezoid surface, respectively, and the side surface of the lens structure 181 opposite to the cover 11 is covered by the extension of the bottom reflective member 16, thus, it is able to avoid the light leakage occurring in the side surface of the lens structure 181. Please refer to FIG. 8, which illustrates a second top side view of the second embodiment of the improved edge-type LED backlight module according to the present invention, as shown in FIG. 8, one concave surface of the lens structure 181 opposite to the LED 13 can be formed to a microstructure surface, for example, a jagged groove surface, for increasing the scattering of the light emitted by the LED 13.

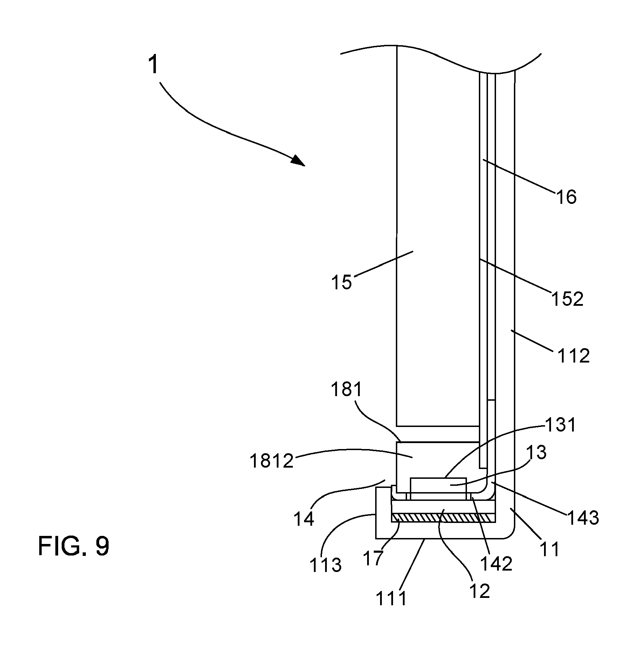

In addition, multiple applications of the improved edge-type LED backlight module 1 according to the present invention are performed by means of changing the appearance shape of the cover 11 and the reflective member 14. Referring to FIG. 9, which illustrates the top view of a third embodiment of the improved edge-type LED backlight module according to the present invention, as shown in FIG. 9, the cover 11 includes a cover bottom portion 111, a cover long portion 112 and a cover short portion 113, wherein the cover short portion 113 can be bent for making the appearance shape of the cover 11 to a " 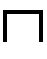 " shape. Moreover, comparing the third embodiment with the second embodiment described above, the appearance shape of the reflective member 14 is the " 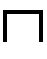 "-like shape and the reflective member short portion 144 is closely attached to the LGP 15 in the third embodiment. Furthermore, as shown in Fig. 3, the two side surfaces 1812 of the lens structure 181 is a square surface, respectively.

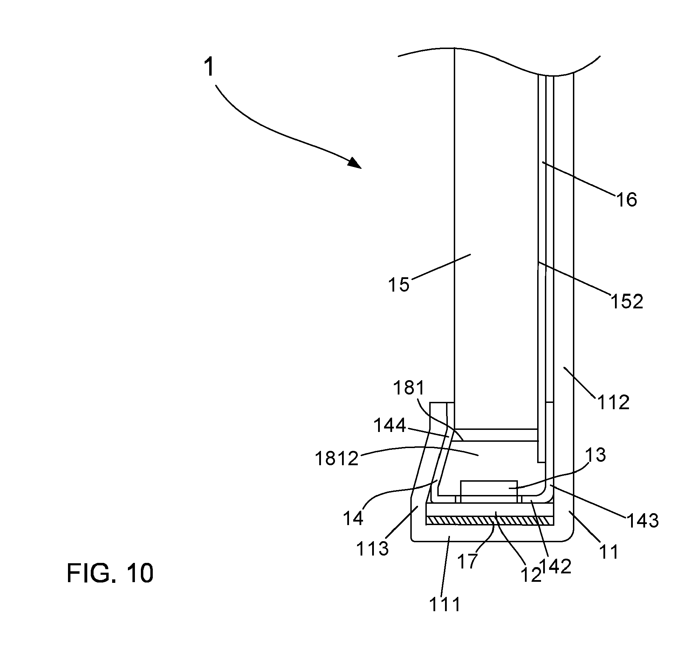

Further referring to FIG. 10, the side view of a fourth embodiment of the improved edge-type LED backlight module 1 is illustrated, as shown in FIG. 10, the reflective member short portion 144 of the reflective member 14 is bent and closely attached to the inner surface of the cover short portion 113, and reflective member long portion 143 is also attached to the inner surface of the cover long portion 112, moreover, the partial reflective member short portion 144 is attached to the LGP 15; besides, the two side surfaces 1812 of the les structure 181 are a trapezoid surface, respectively.

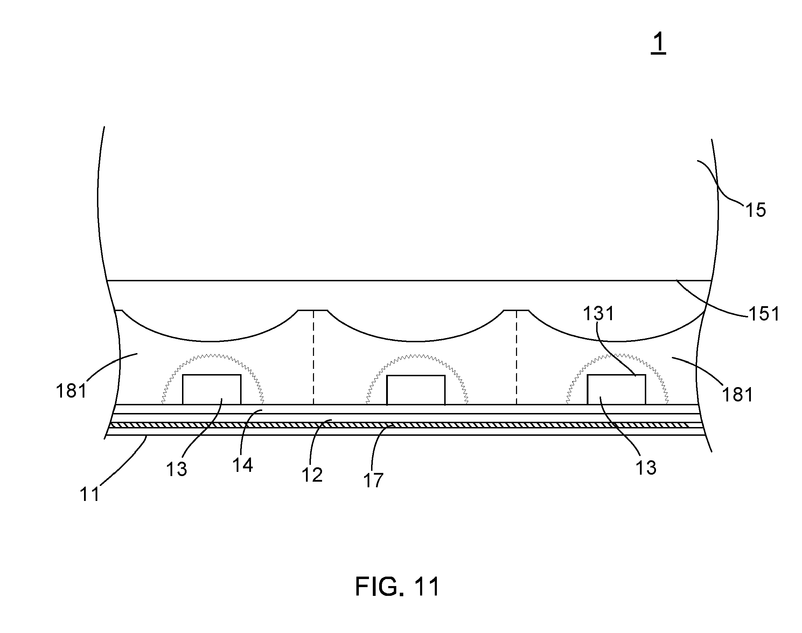

It needs to clarify that the difference between the second embodiment, the third embodiment and the fourth embodiment is the appearance shapes of the cover 11 and the reflective member 14, and it is easily to know that the different shapes of the covers 11 can be used in the improved edge-type LED backlight module 1 with the corresponding reflective members 14 with different shapes. Furthermore, referring to FIG. 11, which illustrates the top view of a fifth embodiment of the improved edge-type LED backlight module according to the present invention. To consider the manufacturing cost of the improved edge-type LED backlight module 1, as shown in FIG. 10, the light incident surface 151 of the LGP 15 not has the concave arc-shaped surfaces 1511, instead that, the lens structures 181 having the microstructure surface are disposed between the LGP 15 and the LEDs 13. Comparing to the second embodiment of the improved edge-type LED backlight module 1 described above, in the fifth embodiment, the light incident surface 151 of the LGP 15 not has the concave arc-shaped surfaces 1511, for this reason, the manufacturing cost of the improved edge-type LED backlight module 1 is reduced, so that the inventor proposes the fifth embodiment of the improved edge-type LED backlight module 1 for low-cost usage.

Thus, through the first embodiment, the second embodiment, the third embodiment, the fourth embodiment, and the fifth embodiment, the improved edge-type LED backlight module according to the present invention have been disclosed completely and clearly in the above description. In summary, the present invention has the following advantages:

1. By way of the plurality of concave arc-shaped surfaces formed on the light incident surface of the light guide plate (LGP), the light which incident into the LGP are evenly spread in the LGP, such that the problem about the incident light being unevenly spread in the LGP occurring in the conventional edge-type LED backlight module is improved.

2. The using of the bottom reflective member preventing the light leakage from occurring in one side surface of the LGP after the light incident the LGP.

3. By means of disposing the plurality of lens structures in the cover and located over the plurality of LEDs, respectively, such that the light can more evenly incident into the LGP by passing through the lens structures.

4. The multiple applications of the improved edge-type LED backlight module are performed by means of changing the appearance shape of the cover and the reflective member.

The above description is made on embodiments of the present invention. However, the embodiments are not intended to limit scope of the present invention, and all equivalent implementations or alterations within the spirit of the present invention still fall within the scope of the present invention.

## Claims

1. An improved edge-type LED backlight module, comprising:
a cover;
a printed circuit board (PCB), being disposed in the cover;
a reflective member, being disposed in the cover and on the PCB, the reflective member having a plurality of openings;
a plurality of LEDs, being disposed in the cover and on the PCB, the LEDs having a light-emitting surface passing through the openings of the reflective member and
emitting a light, respectively;
a light guide plate (LGP), being disposed in the cover and located over the LEDs, the LGP having a light incident surface for receiving the light emitted by the LEDs, the light incident surface having a plurality of concave arc-shaped surfaces corresponding to the LEDs, respectively, wherein when the light incident into the light incident surface, the light may be spread by the concave arc-shaped surfaces and evenly distributed in the LGP; and
a bottom reflective member, being disposed in the cover and connecting to a side surface of the LGP perpendicular to the light incident surface.

2. The improved edge-type LED backlight module of Claim 1, further comprising a plurality of lens structures disposed in the cover, the lens structures are respectively located over the LEDs, so that the light can evenly incident into the light guide plate (LGP) by means of passing through the lens structures, moreover, one side surface of the lens structure having a anti-reflection film for increasing the transmittance of the lens structure.

3. The improved edge-type LED backlight module of Claim 1, wherein the concave arc-shaped surfaces are formed notches on the light incident surface, each of the notches being opposite to each of the LEDs for facilitating the assembly of the light guide plate (LGP) and the cover.

4. The improved edge-type LED backlight module of Claim 1, wherein the printed circuit board (PCB) can be a copper foil circuit and capable of attaching to an inner surface of the cover via a thermally conductive insulating adhesive.

5. The improved edge-type LED backlight module of Claim 1, wherein the appearance shape of the cover can be an "L" shape or a " 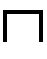 " shape.

6. The improved edge-type LED backlight module of Claim 2, wherein the les structure can be a single-concave lens or a double-concave lens.

7. The improved edge-type LED backlight module of Claim 6, wherein one concave surface of the lens structure opposite to the LED can be formed to a microstructure surface for increasing the scattering of the light.

8. The improved edge-type LED backlight module of Claim 6, wherein one side surface of the lens structure opposite to the cover is covered by the extension of the bottom reflective member.

9. The improved edge-type LED backlight module of Claim 6, wherein two side surfaces of the les structure can be a square surface or a trapezoid surface, respectively.

10. The improved edge-type LED backlight module of Claim 5, wherein the " 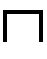 "- shaped cover further comprises a cover bottom portion, a cover long portion and a cover short portion, the cover short portion being able to be bent for facilitating the assembly.

11. The improved edge-type LED backlight module of Claim 1, wherein the appearance shape of the reflective member can be a " 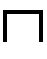 "-like shape.

12. The improved edge-type LED backlight module of Claim 11, wherein the " 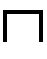 "- like-shaped reflective member further comprises a reflective member bottom portion, a reflective member long portion and a reflective member short portion , the reflective member short portion being able to be bent

## Amended claims

### Amended claims in accordance with Rule 137(2) EPC.

**1.** An improved edge-type LED backlight module, comprising:
a cover;
a printed circuit board, PCB, being disposed in the cover;
a reflective member, being disposed in the cover and on the PCB, the reflective member having a plurality of openings;
a plurality of LEDs, being disposed in the cover and on the PCB, the LEDs having a light-emitting surface passing through the openings of the reflective member and emitting a light, respectively;
a light guide plate, LGP, being disposed in the cover and located over the LEDs, the LGP having a light incident surface for receiving the light emitted by the LEDs, the light incident surface having a plurality of concave arc-shaped surfaces corresponding to the LEDs, respectively, wherein when the light incident into the light incident surface, the light may be spread by the concave arc-shaped surfaces and evenly distributed in the LGP;
a bottom reflective member, being disposed in the cover and connecting to a side surface of the LGP perpendicular to the light incident surface; and
a plurality of lens structures disposed in the cover, wherein the lens structures are respectively located over the LEDs so that the light evenly incidents into the LGP by means of passing through the lens structures, one side surface of the lens structure having an anti-reflection film for increasing the transmittance of the lens structure, wherein one side surface of the lens structure opposite to the cover is covered by the extension of the bottom reflective member;
wherein the concave arc-shaped surfaces are formed notches on the light incident surface, each of the notches being opposite to each of the LEDs for facilitating the assembly of the LGP and the cover; and
wherein the PCB is a copper foil circuit and capable of attaching to an inner surface of the cover via a thermally conductive insulating adhesive.

**2.** The improved edge-type LED backlight module of claim 1, wherein the appearance shape of the cover is an "L" shape or a " 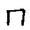 " shape.

**3.** The improved edge-type LED backlight module of claim 1, wherein the lens structure is a single-concave lens or a double-concave lens.

**4.** The improved edge-type LED backlight module of claim 3, wherein one concave surface of the lens structure opposite to the LED is formed to a microstructure surface for increasing the scattering of the light.

**5.** The improved edge-type LED backlight module of claim 3, wherein two side surfaces of the les structure are a square surface or a trapezoid surface, respectively.

**6.** The improved edge-type LED backlight module of claim 2, wherein the " 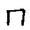 "-shaped cover further comprises a cover bottom portion, a cover long portion and a cover short portion, the cover short portion being able to be bent for facilitating the assembly.

**7.** The improved edge-type LED backlight module of claim 1, wherein the appearance shape of the reflective member is a " 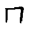 "-like shape.

**8.** The improved edge-type LED backlight module of claim 7, wherein the " 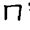 "-like-shaped reflective member further comprises a reflective member bottom portion, a reflective member long portion and a reflective member short portion, the reflective member short portion being able to be bent.
